# EUROPÄISCHE PATENTSCHRIFT

(11) **EP 1 175 259 B1**
(45) Veröffentlichungstag und Bekanntmachung des Hinweises auf die Patenterteilung: **01.10.2003**
(21) Anmeldenummer: 00912440.5
(22) Anmeldetag: 31.01.2000
(51) Int. Cl.: B01J 21/06, B01J 35/10, C04B 35/46

(54) **FORMKÖRPER AUS TITANDIOXID, VERFAHREN ZU DEREN HERSTELLUNG UND DEREN VERWENDUNG**
MOULDED TITANIUM DIOXIDE BODY AND ITS METHODS OF PRODUCTION AND USE
CORPS EN DIOXYDE DE TITANE, ET PROCEDE DE FABRICATION ET D'UTILISATION DUDIT CORPS

(30) Priorität: 26.03.1999 DE 19913839
(43) Veröffentlichungstag der Anmeldung: 30.01.2002
(73) Patentinhaber: Sachtleben Chemie GmbH, 47198 Duisburg (DE)
(72) Erfinder: PROFT, Bernd, D-47506 Neukirchen-Vluyn (DE); HIRSCHBERG, Elke, D-47447 Moers (DE); SELING, Barbara, D-47239 Duisburg (DE); WEYAND, Sonja, D-47059 Duisburg (DE)
(74) Vertreter: Uppena, Franz, Dr.
(86) Internationale Anmeldenummer: EP0000744
(87) Internationale Veröffentlichungsnummer: WO00058007

(56) Entgegenhaltungen:
- EP-A- 0 327 723
- EP-A- 0 357 506
- DE-A- 2 554 198
- US-A- 4 113 660
- DATABASE WPI Section Ch, Week 197822 Derwent Publications Ltd., London, GB; Class E32, AN 1978-39002A XP002140932 & JP 53 042199 A (HITACHI LTD), 17. April 1978 (1978-04-17)

## Beschreibung

Die Erfindung betrifft ein Verfahren zur Herstellung von Formkörpern aus Titandioxid mit einer mittleren Korngröße d₅₀ von 0,01 bis 50 mm und deren Verwendung.

Titan-Formkörper, die im allgemeinen für Festbett- oder Wirbelbett-Systeme verwendet werden, müssen eine ausreichend hohe Festigkeit besitzen, da andernfalls der Katalysator beim Befüllen des Reaktors zerfällt und/oder durch den Gasdruck, die Hitzebelastung und dynamische Belastung während der Reaktion zerkleinert wird oder einem starken Abrieb unterliegt.

Die US-A-4 113 660 betrifft ein Verfahren zur Herstellung von als Katalysator oder als Katalysatorträger dienenden Formkörpern mit verbesserter mechanischer Festigkeit, die überwiegend aus Titandioxid bestehen. Die Herstellung dieser Formkörper erfolgt in der Weise, daß Titandioxid oder eine Vorläufersubstanz des Titandioxids in Gegenwart von Metatitansäure-Sol oder-Gel einer kalzinierenden Behandlung bei Temperaturen von 200 bis 800 °C unterworfen werden. Gegenstand der US-A-4 061 596 ist ein Verfahren zur Herstellung von Titandioxid-Formkörpern, wobei Titandioxid bei Temperaturen von 400 bis 800°C kalziniert und dem kalzinierten Titandioxid eine Mineralsäure u. a. Salpetersäure und Vorstufen von Titandioxid, ausgewählt aus Titanhydroxid, Titandioxid-Sol oder Titansäureester zugesetzt werden. Die aus dieser Mischung erzeugten Formkörper werden bei 300 bis 800 °C einer kalzinierenden Behandlung unterworfen. Die so behandelten Formkörper sollen eine verbesserte mechanische Festigkeit besitzen. in der DE-C-41 41 936 ist ein Verfahren zur Herstellung von aus Titandioxid bestehenden Pellets beschrieben, bei dem Metatitansäure oder Orthotitansäure ohne Zusatzstoffe bei einer Temperatur von 120 bis 250 °C und einem Druck von 2 bis 40 bar für die Dauer von 0,1 bis 30 Stunden in Gegenwart von Wasser behandelt und danach getrocknet wird. Diese Substanz wird anschließend in einer Pelletiervorrichtung unter Zugabe von Wasser zu Pellets geformt und die Pellets bei einer Temperatur von 100 bis 1000 °C behandelt. Als Pelletiervorrichtung dient beispielsweise ein Granulierteller oder eine Drehtrommel, wobei die hydrothermal behandelte Metatitansäure oder Orthotitansäure auf die jeweilige Pelletiervorrichtung aufgegeben und unter Aufsprühen von Wasser granuliert wird. Die hergestellten Pellets besitzen eine relativ hohe Druckfestigkeit von durchschnittlich 3 bis 10 N, so daß sie als Bettmaterial in Festbett- wie in Wirbelbett-Systemen einsetzbar sind.

Es ist die Aufgabe der vorliegenden Erfindung, aus Titandioxid bestehende Formkörper mit einer mittleren Korngröße d₅₀ von 0,01 bis 50 mm bereitzustellen, die eine verbesserte Druckfestigkeit besitzen, in denen der Anteil an Fremdionen außergewöhnlich niedrig ist, deren Abriebfestigkeit groß ist und die mit normalem Aufwand ohne Verwendung von Bindemitteln herstellbar sind. Weiterhin soll die Herstellung solcher Formkörper einfacher durchzuführen sein als bisher bekannte Herstellverfahren.

Gelöst ist diese Aufgabe durch ein Verfahren zur Herstellung von Formkörpern aus Titandioxid mit einer mittleren Korngröße d₅₀ von 0,01 bis 50 mm, die jeweils aus Primärkristalliten des Titanoxids der Anatas-Modifikation mit einer Kristallitgröße nach Scherrer von bis zu 40 nm, vorzugsweise 10 bis 30 nm, zusammengesetzt sind und eine nach der BET-Methode ermittelte spezifische Oberfläche von 20 bis 150 m²/g, ein Porenvolumen von 0,1 bis 0,45 cm³/g und einen Porendurchmesser von 100 bis 300 Å aufweisen, wobei das Titandioxid-Pulver bei einer Temperatur von 120 bis 250 °C und einem Druck von 2 bis 40 bar für die Dauer von 0,1 bis 30 Stunden in Gegenwart von Wasser vorbehandelt und anschließend getrocknet wird, die aus einer pastenförmigen Mischung von dem so vorbehandelten Titandioxid-Pulver und Titandioxid-Sol und/oder 1 bis 20 %-iger Salpetersäure erzeugten Formkörper getrocknet und bei einer Temperatur von 400 bis 1000 °C für die Dauer von 0,5 bis 3,5 Stunden, vorzugsweise 1,5 bis 2,5 Stunden lang, geglüht werden.

Bevorzugt besteht die pastenförmige Mischung aus 1 bis 50 Gew.-% Titandioxid-Pulver und 50 bis 99 Gew.-% Titandioxid-Sol und/oder 1 bis 15 %-iger Salpetersäure.

Nach einer Verfahrensvariante werden Formkörpern aus Titandioxid mit den oben beschriebenen Eigenschaften dadurch hergestellt, daß das Titandioxid-Pulver unter Zugabe von Wasser zu Pellets geformt, die Pellets bei Temperaturen von 300 bis 500 °C geglüht, anschließend mit Titandioxid-Sol oder 1 bis 20 %-iger Salpetersäure unter Vakuum getränkt, getrocknet und anschließend bei einer Temperatur von 400 bis 1000 °C 0,5 bis 3 Stunden lang, vorzugsweise 1,5 bis 2,5 Stunden lang, geglüht werden.

Die beste Druckfestigkeit der Formkörper wird erzielt, wenn bei der Herstellung entweder Primärkristallite mit einer Korngröße von 4 bis 10 nm oder mit einer Korngröße 10 bis 15 nm eingesetzt werden. Die Kristallitgröße nach der Glühung beträgt 10 bis 40 µm.

Die mit der Erfindung erzielten Vorteile sind insbesondere darin zu sehen, daß die Druckfestigkeit der zylinder- und prismenförmigen Formkörper jeweils wenigstens 7 N/mm, diejenige der kugelförmigen Formkörper jeweils wenigstens 15 N/mm betragen und die Abriebfestigkeit < 1 % ist.

Die Erfindung ist nachfolgend an mehreren Ausführungsbeispielen näher erläutert:

### 1. Ausführungsbeispiel

Ein Titandioxid-Pulver der Anatas-Modifikation wird mit Wasser gemischt, die Mischung bei einer Temperatur von 175 °C und einem Druck von 20 bar behandelt. Anschließend wird das so vorbehandelte Titandioxid-Pulver mit einer mittleren Primärkristallitgröße nach Scherrer d₅₀ von 12 nm und einer spezifischen Oberfläche von 103 m²/g getrocknet und danach mit 66 Gew.-% Titandioxid-Sol mit einem Gehalt von 40 Gew.-% an Titandioxid zu einer formstabilen Paste verarbeitet. Die Paste wird zu Strängen mit einem Durchmesser von 4 mm extrudiert, von denen 5 bis 15 mm lange Formkörper abgelängt, die Formkörper getrocknet und jeweils 150 g Formkörper bei einer Temperatur von 400 °C, 600 °C und 800 °C für 2 Stunden geglüht.

Nach der 400 °C-Glühung besitzen die Formkörper eine mittlere Druckfestigkeit von 8 N/mm pro Formkörper, eine spezifische Oberfläche von 100 m²/g, ein Porenvolumen von 0,34 ml/g, einen mittleren Porendurchmesser von 137 Å und eine Abriebfestigkeit von < 1 %.

Nach der 600 °C-Glühung besitzen die Formkörper eine mittlere Druckfestigkeit von 13 N/mm pro Formkörper, eine spezifische Oberfläche von 63 m²/g, ein Porenvolumen von 0,27 ml/g, einen mittleren Porendurchmesser von 170 Å und eine Abriebfestigkeit von < 1 %.

Nach der 800 °C-Glühung besitzen die Formkörper eine mittlere Druckfestigkeit von 24 N/mm pro Formkörper, eine spezifische Oberfläche von 13 m²/g, ein Porenvolumen von 0,08 ml/g, einen mittleren Porendurchmesser von 254 Å und eine Abriebfestigkeit von < 1 %.

### 2. Ausführungsbeispiel

Das gemäß dem 1. Ausführungsbeispiel vorbehandelte Titandioxid-Pulver wird mit 63 Gew.-% Titandioxid-Sol mit einem Titan-Gehalt von 40 Gew.-% zu einer formstabilen Paste gemischt, die zu Strängen mit einem Durchmesser von 4 mm extrudiert wird. Die Stränge werden, wie im 2. Ausführungsbeispiel dargestellt, weiterbehandelt.

Nach der 400 °C-Glühung besitzen die Formkörper eine mittlere Druckfestigkeit von 14 N/mm pro Formkörper, eine spezifische Oberfläche von 100 m²/g, ein Porenvolumen von 0,35 ml/g, einen mittleren Porendurchmesser von 254 Å und eine Abriebfestigkeit von. < 1 %.

Nach der 600 °C-Glühung besitzen die Formkörper eine mittlere Druckfestigkeit von 21 N/mm pro Formkörper, eine spezifische Oberfläche von 56 m²/g, ein Porenvolumen von 0,26 ml/g, einen mittleren Porendurchmesser von 183 Å und eine Abriebfestigkeit von < 1 %.

Nach der 800 °C-Glühung besitzen die Formkörper eine mittlere Druckfestigkeit von 22 N/mm pro Formkörper, eine spezifische Oberfläche von 13 m²/g, ein Porenvolumen von 0,09 mf/g, einen mittleren Porendurchmesser von 293 Å und eine Abriebfestigkeit von < 1 %.

### 3. Ausführungsbeispiel

Ein nach dem 1. Ausführungsbeispiel hergestelltes Titandioxid-Pulver wird mit 5 %-iger Salpetersäure zu einer Paste gemischt und danach zu Strängen von 4 mm Durchmesser extrudiert, von den Strängen 5 bis 15 mm lange Formkörper abgelängt und, wie im 2. Ausführungsbeispiel beschrieben, weiterbehandelt.

Nach der 400 °C-Glühung besitzen die Formkörper eine mittlere Druckfestigkeit von 13 N/mm pro Formkörper, eine spezifische Oberfläche von 83,2 m²/g, ein Porenvolumen von 0,27 ml/g, einen mittleren Porendurchmesser von 128 Å und eine Abriebfestigkeit von < 1 %.

Nach der 600 °C-Glühung besitzen die Formkörper eine mittlere Druckfestigkeit von 22 N/mm pro Formkörper, eine spezifische Oberfläche von 58 m²/g, ein Porenvolumen von 0,22 ml/g, einen mittleren Porendurchmesser von 149 Å und eine Abriebfestigkeit von < 1 %.

Nach der 800 "C-Glühung besitzen die Formkörper eine mittlere Druckfestigkeit von 40 N/mm pro Formkörper, eine spezifische Oberfläche von 10,4 m²/g, ein Porenvolumen von 0,06 ml/g, einen mittleren Porendurchmesser von 241 Å und eine Abriebfestigkeit von < 1 %.

### 4. Ausführungsbeispiel

Titandioxid-Pulver der Anatas-Modifikation wird mit Wasser gemischt, die Mischung bei einer Temperatur von 175 °C und einem Druck von 20 bar behandelt und anschließend getrocknet. Dieses hydrothermal vorbehandelte Titandioxid-Pulver mit einer mittleren Primärkristallitgröße nach Scherrer d₅₀ von 12 nm und einer spezifischen Oberfläche von 103 m²/g wird unter Besprühen Wasser mit Hilfe eines Pelletiertellers zu Pellets geformt. Der Pellet-Durchmesser beträgt nach einer Siebung 2,5 bis 3 mm. Die Pellets werden bei einer Temperatur von 110 °C getrocknet und anschließend bei einer Temperatur von 400 °C für 3 Stunden geglüht. Anschließend werden die Pellets in Titandioxid-Sol mit einem Titandioxid-Gehalt von 35 Gew.-% unter Vakuum getränkt, bei 110 °C erneut getrocknet und danach jeweils 150 g Pellets bei einer Temperatur von 400 °C, 600 °C beziehungsweise 800 °C für 2 Stunden geglüht.

Nach der 400 °C-Glühung besitzen die Formkörper eine mittlere Druckfestigkeit von 16 N pro Pellet, eine spezifische Oberfläche von 98 m²/g, ein Porenvolumen von 0,37 ml/g, einen mittleren Porendurchmesser von 151 Å und eine Abriebfestigkeit von < 1 %.

Nach der 600 °C-Glühung besitzen die Formkörper eine mittlere Druckfestigkeit von 19 N pro Pellet, eine spezifische Oberfläche von 67 m²/g, ein Porenvolumen von 0,30 ml/g, einen mittleren Porendurchmesser von 176 Å und eine Abriebfestigkeit von < 1 %.

Nach der 800 °C-Glühung besitzen die Formkörper eine mittlere Druckfestigkeit von 41 N pro Pellet, eine spezifische Oberfläche von 19,2 m²/g, ein Porenvolumen von 0,12 ml/g, einen mittleren Porendurchmesser von 259 Å und eine Abriebfestigkeit von < 1 %.

Um die Druckfestigkeit der Formkörper zu ermitteln, werden diese zwischen zwei Druckplatten einer Druckprüfpresse unter kontinuierlich zunehmendem Druck bis zum Bruch belastet. Dabei werden 10 zylindrische Probekörper (d = 4 mm, 1 = 5 bis 15 mm) senkrecht zu deren Längsachse druckbelastet und die Druckfestigkeit pro mm Länge (N/mm) ermittelt und aus den 10 Meßwerten der Mittelwert gebildet. Bei Pellets wird deren Druckfestigkeit N als Mittelwert aus 10 Messungen an kugelförmigen Formkörpern angegeben.

Zur Bestimmung des Abriebs wird von jeweils 100 g Probekörpern der Feinkornanteil < 4 mm abgesiebt, der Siebüberlauf in einem zylindrischen Behälter (d = 80 mm, h = 160 mm) eingefüllt, der geschlossene Behälter um seine Längsachse 15 min lang mit 120 Umdrehungen pro Minute gedreht, der Behälter entleert und der Feinkornanteil von < 1 mm abgesiebt. Aus der Gewichtsdifferenz der beiden Siebüberläufe wird der Abrieb in % berechnet.

Die Bestimmung der spezifischen Oberfläche der Formkörper erfolgt nach der BET-Methode.

Porenvolumen und Porendurchmesser werden nach der Methode der Stickstoffdesorption ermittelt und nach der BJH-Methode ausgewertet.

Die Formkörper besitzen eine große spezifische Oberfläche, ein großes Porenvolumen mit einem engen Porenspektrum, eine große Druckfestigkeit, eine große Abriebfestigkeit, eine große thermische Stabilität und sind gegenüber Säuren, Laugen und Oxidationsmitteln beständig. Aufgrund der Halbleitereigenschaft von Titandioxid zeigen die Formkörper UV-Aktivität. Diese Eigenschaften machen die Formkörper beispielsweise geeignet als Katalysatoren, als Photokatalysatoren, als Katalysatorträger, als Filter/Fritten, als stationäre Phase in der Chromatographie, als Pharmaretardträger und Sauerstoffsensor.

## Patentansprüche

1. Verfahren zur Herstellung der Formkörper aus Titandioxid mit einer mittleren Korngröße d₅₀ von 0,01 bis 50 mm, die jeweils aus Primärkristalliten des Titanoxids der Anatas-Modifikation mit einer Kristallitgröße nach Scherrer von bis zu 40 nm zusammengesetzt sind und eine nach der BET-Methode ermittelte spezifische Oberfläche von 20 bis 150 m²/g, ein Porenvolumen von 0,1 bis 0,45 cm³/g und einen Porendurchmesser von 100 bis 300 Å aufweisen, **dadurch gekennzeichnet, daß** das Titandioxid-Pulver bei einer Temperatur von 120 bis 250 °C und einem Druck von 2 bis 40 bar für die Dauer von 0,1 bis 30 Stunden in Gegenwart von Wasser vorbehandelt und anschließend getrocknet wird, die aus einer pastenförmigen Mischung von dem so vorbehandelten Titandioxid-Pulver und Titandioxid-Sol und/oder 1 bis 20 %-iger Salpetersäure erzeugten Formkörper getrocknet und bei einer Temperatur von 400 bis 1000 °C für die Dauer von 0,5 bis 3,5 Stunden, vorzugsweise 1,5 bis 2,5 Stunden lang, geglüht werden.

2. Verfahren nach Anspruch 1, **dadurch gekennzeichnet, daß** die pastenförmige Mischung aus 1 bis 50 Gew.-% Titandioxid-Pulver und 50 bis 99 Gew.-% Titandioxid-Sol und/oder 1 bis 15 %-iger Salpetersäure besteht.

3. Verfahren zur Herstellung von Formkörpern aus Titandioxid mit einer mittleren Korngröße d₅₀ von 0,1 bis 50 mm, die jeweils aus Primärkristalliten des Titandioxids der Anatas-Modifikation mit einer Primärkristallitgröße nach Scherrer von bis zu 40 nm zusammengesetzt sind und die eine nach der BET-Methode ermittelte spezifische Oberfläche von 20 bis 150 m²/g, ein Porenvolumen von 0,1 bis 0,45 cm³/g und einen Porendurchmesser von 100 bis 300 Å aufweisen, **dadurch gekennzeichnet, daß** das Titandioxid-Pulver unter Zugabe von Wasser zu Pellets geformt, die Pellets bei Temperaturen von 300 bis 500 °C geglüht, anschließend mit Titandioxid-Sol oder 1 bis 20 %-iger Salpetersäure unter Vakuum getränkt, getrocknet und anschließend bei einer Temperatur von 400 bis 1000 °C 0,5 bis 3 Stunden lang, vorzugsweise 1,5 bis 2,5 Stunden lang, geglüht werden.

4. Formkörper aus Titandioxid, hergestellt nach einem Verfahren gemäß einem der Ansprüche 1 bis 3.

5. Verwendung der Formkörper aus Titandioxid, hergestellt nach einem Verfahren gemäß einem der Ansprüche 1 bis 3, als Katalysatoren, als Katalysatorträger, als Filter/Fritten, als stationäre Phase in der Chromatographie, als Pharmaretardträger und als Sauerstoffsensor.

6. Verwendung der Formkörper aus Titandioxid, hergestellt nach einem Verfahren gemäß einem der Ansprüche 1 bis 3 als Photokatalysatoren.

## Claims

1. Process for the production of titanium dioxide moulded bodies having a mean particle size d₅₀ of from 0.01 to 50 mm which are in each case composed of primary crystallites of titanium oxide of the anatase modification having a crystallite size of up to 40 nm in accordance with the Scherrer equation and a specific surface area of from 20 to 150 m²/g determined by the BET method, a pore volume of from 0.1 to 0.45 cm³/g and a pore diameter of from 100 to 300 Å, **characterised in that** the titanium dioxide powder is pre-treated at a temperature of from 120 to 250°C and a pressure of from 2 to 40 bar for from 0.1 to 30 hours in the presence of water and is then dried, the moulded bodies produced from a pasty mixture of the titanium dioxide powder thus pre-treated and titanium dioxide sol and/or nitric acid of from 1 to 20% concentration are dried and are annealed at a temperature of from 400 to 1000°C for from 0.5 to 3.5 hours, preferably 1.5 to 2.5 hours.

2. Process according to Claim 1, **characterised in that** the pasty mixture comprises from 1 to 50 wt.% titanium dioxide powder and from 50 to 99 wt.% titanium dioxide sol and/or nitric acid of from 1 to 15% concentration.

3. Process for the production of titanium dioxide moulded bodies having a mean particle size d₅₀ of from 0.1 to 50 mm which are in each case composed of primary crystallites of titanium dioxide of the anatase modification having a primary crystallite size of up to 40 nm in accordance with the Scherrer equation and a specific surface area of from 20 to 150 m²/g determined by the BET method, a pore volume of from 0.1 to 0.45 cm³/g and a pore diameter of from 100 to 300 Å, **characterised in that** the titanium dioxide powder is formed into pellets with the addition of water, the pellets are annealed at temperatures of from 300 to 500°C, are then impregnated under vacuum with titanium dioxide sol or nitric acid of from 1 to 20% concentration, are dried and are then annealed at a temperature of from 400 to 1000°C for 3 hours, preferably from 1.5 to 2.5 hours.

4. Titanium dioxide moulded bodies produced by a process according to one of Claims 1 to 3.

5. Use of the titanium dioxide moulded bodies produced by a process according to one of Claims 1 to 3, as catalysts, as catalyst supports, as filters/frits, as the stationary phase in chromatography, as carriers for slow-release pharmaceuticals and as oxygen sensors.

6. Use of the titanium dioxide moulded bodies produced by a process according to one of Claims 1 to 3, as photocatalysts.

## Revendications

1. Procédé pour la fabrication de pièces moulées à partir de particules de dioxyde de titane ayant une taille de moyenne d₅₀ comprise entre 0,01 et 50 mm, composées de cristaux primaires d'oxyde de titane sous la forme anatase ayant une taille de cristallites selon Scherrer pouvant aller jusqu'à 40 nm, et ayant une surface spécifique déterminée selon la méthode BET comprise entre 20 et 150 m²/g, un volume poreux compris entre 0,1 et 0,45 cm³/g et un diamètre de pores compris entre 100 et 300 Angstroms, **caractérisé par le fait que** la poudre de dioxyde de titane est prétraitée à une température comprise entre 120 et 250 °C et à une pression comprise entre 2 et 40 bars pendant une durée comprise entre 0,1 et 30 heures en présence d'eau et est ensuite séchée, que l'on sèche les pièces moulées préparées à partir d'un mélange pâteux constitué de la poudre de dioxyde de titane ainsi prétraitée et de sol de dioxyde de titane et/ou d'acide nitrique ayant une concentration allant de 1 à 20 %, et que l'on fait cuire ces pièces à une température comprise entre 400 et 1000 °C, pendant une durée comprise entre 0,5 et 3,5 heures, de préférence entre 1,5 et 2,5 heures.

2. Procédé selon la revendication 1, **caractérisé par le fait que** le mélange pâteux est constitué de 1 à 50 % en poids de dioxyde de titane et de 50 à 99 % en poids de sol de dioxyde de titane et/ou d'acide nitrique à 1 - 15 %.

3. Procédé pour la fabrication de pièces moulées à partir de particules de dioxyde de titane ayant une taille moyenne d₅₀ comprise entre 0,1 et 50 mm, composées de cristaux primaires d'oxyde de titane sous la forme anatase, ayant une taille de cristallites selon Scherrer pouvant aller jusqu'à 40 nm, et une surface spécifique déterminée selon la méthode BET comprise entre 20 et 150 m²/g, un volume poreux compris entre 0,1 et 0,45 cm³/g et un diamètre de pores compris entre 100 et 300 Angstroms, **caractérisé par le fait que** l'on met la poudre de dioxyde de titane en présence d'eau sous forme de pellets, que l'on fait cuire les pellets à une température comprise entre 300 et 500 °C, qu'on imbibe ensuite ces pellets sous vide avec un sol de dioxyde de titane ou avec de l'acide nitrique à 1 à 20 %, qu'on les sèche et les fait cuire à une température comprise entre 400 et 1000 °C, pendant une durée comprise entre 0,5 et 3,5 heures, de préférence entre 1,5 et 2,5 heures.

4. Pièces moulées en dioxyde de titane préparées par un procédé selon l'une des revendications 1 à 3.

5. Utilisation des pièces moulées en dioxyde de titane préparées par un procédé selon l'une des revendications 1 à 3, en tant que catalyseurs, supports pour catalyseurs, filtres/frittés, phases stationnaires pour la chromatographie, excipient retard pour compositions pharmaceutiques et en tant que capteurs d'oxygène.

6. Utilisation des pièces moulées en dioxyde de titane préparées par un procédé selon l'une des revendications 1 à 3 en tant que photocatalyseur.
